# EUROPÄISCHE PATENTSCHRIFT

(11) **EP 1 824 698 B1**
(45) Veröffentlichungstag und Bekanntmachung des Hinweises auf die Patenterteilung: **05.03.2014**
(21) Anmeldenummer: 05815655.5
(22) Anmeldetag: 09.12.2005
(51) Int. Cl.: B60K 6/00

(54) **VERFAHREN ZUR STEUERUNG EINES BREMSSYSTEMS EINES KRAFTFAHRZEUGES**
METHOD FOR CONTROLLING A BRAKING SYSTEM OF A MOTOR VEHICLE
PROCEDE POUR COMMANDER UN SYSTEME DE FREINAGE D'UN VEHICULE AUTOMOBILE

(30) Priorität: 09.12.2004 DE 102004059585; 09.12.2005 DE 102005059373
(43) Veröffentlichungstag der Anmeldung: 29.08.2007
(73) Patentinhaber: Continental Teves AG & Co. oHG, 60488 Frankfurt am Main (DE)
(72) Erfinder: JÄGER, Markus, 65760 Eschborn (DE); SCHMITT, Gregor, 93047 Regensburg (DE)
(86) Internationale Anmeldenummer: PCT/EP2005/056648
(87) Internationale Veröffentlichungsnummer: WO 2006/061433

(56) Entgegenhaltungen:
- WO-A-2004/080774
- DE-A1- 4 446 219
- DE-A1- 10 101 830
- DE-A1- 19 532 163
- US-A- 6 116 363
- US-A1- 2003 230 933

## Beschreibung

Die Erfindung betrifft ein Verfahren zur Steuerung eines Bremssystems eines Kraftfahrzeuges, insbesondere für die Steuerung eines regenerativen Bremssystems, mit einer Anzahl von Reibbremsen und einem elektrischen Generator für ein Kraftfahrzeug. Sie betrifft weiterhin ein regeneratives Bremssystem für ein Kraftfahrzeug.

In Kraftfahrzeugen können so genannte regenerative Bremssysteme zum Einsatz kommen, bei denen zumindest ein Teil der beim Bremsen aufgebrachten Energie im Fahrzeug gespeichert und später für den Antrieb des Fahrzeuges wiederverwendet werden kann. Dadurch kann der Energieverbrauch des Fahrzeuges insgesamt gesenkt, der Wirkungsgrad erhöht und der Betrieb damit wirtschaftlicher gestaltet werden. Kraftfahrzeuge mit einem regenerativen Bremssystem weisen im Hinblick auf variierende Systemanforderungen dazu in der Regel verschiedene Arten von auch als Bremsaktuatoren bezeichneten Bremsen, nämlich üblicherweise einerseits hydraulisch betätigte Reibbremsen und andererseits eine elektrisch-regenerative Bremse, auf.

Der Bremsdruck für die Reibbremsen wird in derartigen Systemen zumindest teilweise wie bei konventionellen Reibbremsen über ein Bremsdruckerzeugungsmittel bzw. über die Bremspedalbewegung aufgebracht. Die elektrisch-regenerative Bremse ist in der Regel als elektrischer Generator ausgebildet, über den zumindest ein Teil der gesamten Bremsleistung aufgebracht wird. Die gewonnene elektrische Energie wird in ein Speichermedium wie beispielsweise eine Bordbatterie ein- bzw. zurückgespeist und für den Antrieb des Kraftfahrzeuges über einen geeigneten Antrieb wiederverwendet.

Regenerative Bremssysteme können als so genannte serielle regenerative Konzepte ausgeführt werden, bei denen der Anteil des Bremsmomentes, der vom Generator aufgebracht wird, möglichst hoch ist. Dagegen sind auch parallele oder so genannte schleppmomentbasierte regenerative Konzepte bekannt, bei denen das Bremsmoment auf die Bremsaktuatoren in vorbestimmten Verhältnissen aufgeteilt wird. Weiterhin sind Mischkonzepte dieser Bremskonzepte bekannt. Allen Systemen gemeinsam ist, dass zumindest in einigen Bereichen des aufzubringenden Bremsmomentes mit mehreren Bremsaktuatoren gleichzeitig gebremst wird, so dass sich die Gesamtverzögerung aus den Verzögerungsanteilen der Bremsaktuatoren zusammensetzt.

Grundsätzlich wird dabei im allgemeinen eine Aufteilung der Bremsenergie in Anteile der Reibbremsen und in Anteile des elektrischen Generators vorgenommen, die vom Sollbremsmoment, dem Ladezustand der Batterie und besonders dem Betriebsbereich und anderen speziellen Eigenschaften des Generators abhängig ist. Bei regenerativen Bremssystemen wird der Bremsdruck wegen der Bremsenergieaufteilung daher zumindest teilweise unabhängig vom hydraulischen Einfluss des Bremspedals aufgebaut.

Bei konventionellen Bremssystemen dagegen, die nur eine Reibbremse aufweisen, wird der Bremsdruck in Abhängigkeit von der Stellung des Bremspedals aufgebaut. Dabei wird über die Stellung des Bremspedals mit oder ohne Hilfsenergie der Druck eines Bremsmittels aufgebaut, das von der Reibbremse aufgenommen wird. Die Pedalstellung korrespondiert also dabei mit dem Bremsverhalten des Kraftfahrzeuges. Ausnahmen können die Einsätze von elektronischen Sicherheitssystemen wie beispielsweise eines elektrischen Stabilitätsprogrammes (ESP) sein, die Einrichtungen zum selbständigen Bremsdruckaufbau, unabhängig von der Bremspedalstellung, umfassen können.

Im Vergleich zu diesem konventionellen Bremsverhalten ist beim Bremsverhalten eines regenerativen Bremssystems, bestehend aus der Kombination einer elektrisch regenerativen Bremse und einer konventionellen, hydraulisch betätigten Reibungsbremse, nachteilig, dass die Stellung des Bremspedals nicht notwendigerweise mit dem Bremsverhalten des Kraftfahrzeuges korrespondiert. So kann beispielsweise während einer Erhöhung der Bremsverzögerung die Stellung des Bremspedals konstant bleiben, was für den Fahrer ein sehr ungewohntes Bremsgefühl darstellt, so dass sich nur ein ungenügender Bremskomfort einstellt.

Als Lösung für dieses Problem können so genannte "brake-by-wire"-Systeme eingesetzt werden. Bei diesen Bremssystemen wird mit elektronischen Sensoren der Bremswunsch des Fahrers am Bremspedal erfasst. Dabei wird beispielsweise über elektronisch angesteuerte Ventile Bremsmittel von einem Hochdruckspeicher zu den Reibbremsen geleitet. Der Hochdruckspeicher wird dabei von einem Motorpumpenaggregat mit Bremsmittel befüllt und mit dem entsprechenden Druck beaufschlagt. Bei derartigen "brake-by-wire"-Systemen wird in der Regel der benötigte Bremsdruck an den Reibbremsen mit Ausnahme von einem Ausfall von Systemkomponenten ausschließlich von dem Hochdruckspeicher aufgebracht, so dass das Bremspedal prinzipiell von den Reibbremsen entkoppelt ist, da die Steuerung bzw. die Bremsmittelabgabe an die Reibbremsen elektronisch geregelt und gesteuert wird. Durch die Entkopplung des Bremspedals von den Reibbremsen kann eine für ein regeneratives Bremssystem geeignete Pedalsteuerung in das Bremssystem integriert werden, so dass sich ein annehmbares Bremspedalgefühl einstellt.

Bei einer Ausführung eines regenerativen "brake-by-wire"-Systems als serielles Bremssystem wird angestrebt, einen möglichst hohen Bremsmomentanteil mit der elektrisch regenerativen Bremse zu erzielen. Dazu wird zunächst ausschließlich mit dem elektrischen Generator gebremst. Erst wenn das Gesamtsollbremsmoment das vom Generator maximal aufzubringende Bremsmoment überschreitet, werden die Reibbremsen wie oben beschrieben elektronisch zugeschaltet. Das maximal vom Generator aufzubringende Bremsmoment hängt dabei sowohl vom Ladezustand der Bordbatterie ab als auch vom Betriebsbereich und Wirkungsgrad des Generators, der je nach Geschwindigkeit des Kraftfahrzeuges variiert.

Aus der gattungsgemäßen US 2003/0230933 A1 ist ein Verfahren zur Regelung einer regenerativen Bremsung für ein mit einem Fahrdynamikregelsystem ausgestatteten Fahrzeug bekannt, bei dem an den Rädern mindestens einer Achse ein regeneratives Bremsmoment aufgebracht werden kann, wobei die Räder mindestens einer Achse mit Reibbremsen verbunden sind. Wenn das Fahrdynamikregelsystem ein Übersteuern oder ein Untersteuern des Fahrzeugs feststellt, wird das Fahrzeug nach Vorgaben des Fahrdynamikregelsystems angesteuert, wobei eine tatsächliche Bremskraftverteilung mit einer gewünschten Bremskraftverteilung verglichen wird, und wobei der Anteil der regenerativen Bremskraft und der Reibbremskraft angepasst werden, wenn erkannt wird, dass die Räder der Vorderachse oder der Hinterachse verglichen mit der gewünschten Bremskraftverteilung überbremst werden. Es ist vorzugsweise vorgesehen, dass der Übergang zwischen regenerativen Bremsen und Reibbremsen sanft verläuft, wobei die Reibbremskraft in dem Maße erhöht wird, wie die regenerative Bremskraft reduziert wird.

Die US 6116363 A offenbart eine Vorrichtung zur Steuerung eines Hybridfahrzeugs mit einem elektrischen Antrieb, einer Batterie und einer Verbrennungskraftmaschine als Hilfsantrieb. Bei einer Bremsung werden der elektrische Antrieb und das Reibbremssystem derart angesteuert, das während 30% des Pedalwegs des Bremspedals eine regenerative Bremsung erfolgt, wohingegen für die verbleibenden 70% des Pedalwegs die Bremskraft durch Reibbremsen aufgebracht wird.

In der DE 101 01 830 A1 ist eine Bremsmomentregelung für ein Fahrzeug mit Bremsenergierückgewinnungsmitteln, die ein erstes Bremsmoment erzeugen können, welches ein maximales erstes Bremsmoment nicht übersteigen kann, und einer mechanischen Bremsanlage bekannt, welche ein zweites Bremsmoment erzeugen kann. Der Bremsmomentregelung wird ein Sollbremsmoment zugeführt, und das erste Bremsmoment und/oder das zweite Bremsmoment werden derart geregelt, dass ein über eine Sensorik erfasstes Istbremsmoment dem Sollbremsmoment nachgeführt wird.

Weitere regenerative Bremssysteme bzw. elektrische Antriebsstränge sind aus der DE 195 32 163 A1, der WO 2004/080774 A1 und der DE 44 46 219 A1 bekannt.

Nachteilig an der Zuschaltung der Reibbremsen bei einem derartigen "brake-by-wire"-System ist, dass durch Schwankungen des maximalen Generatorbremsmomentes im Geschwindigkeitsverlauf oder Schwankungen der Bremsanforderung die Reibbremsen wiederholt aktiviert und deaktiviert werden, was zu einem erhöhten Verschleiß der Reibbremsen führt. Durch die erhöhte Geräuschbelastung bei einem sich wiederholenden Zu- und Abschalten von Reibbremsen führt dieses Bremsverhalten auch zu einem unangenehmen Brems- und Fahrkomfort für den Fahrer. Ein ähnliches Problem kann auftreten, wenn die Reibbremsen an verschiedenen Achsen des Kraftfahrzeuges getrennt angesteuert werden und aufgrund einer optimalen Bremskraftverteilung und des in der Regel lediglich auf eine Achse des Kraftfahrzeuges wirkende Generatorbremsmoments die Reibbremsen an der anderen Achse zwar aktiviert sind, jedoch auf der Generatorachse gerade nicht. Auch dabei führen leichte Schwankungen der Bremsanforderung oder der verfügbaren Generatorbremsleistung zum wiederholten Aktivieren und Passivieren der Reibbremsen an der Generatorachse. Auch hierbei führt ein sich wiederholendes Zu- und Abschalten der Reibbremsen zu einem negativen Bremsgefühl für den Fahrer.

Der Erfindung liegt daher die Aufgabe zugrunde, ein Verfahren für die Steuerung eines oben beschriebenen Bremssystems anzugeben, mit dem sich bei geringem Aufwand ein hoher Bremskomfort mit dem Bremssystem erreichen lässt. Weiterhin soll ein Bremssystem für die Durchführung des Verfahrens angegeben werden.

Diese Aufgabe wird erfindungsgemäß durch ein Verfahren gemäß Anspruch 1 und durch ein Bremssystem gemäß Anspruch 7 gelöst.

Nach der Vorgabe eines situationsabhängig ermittelten Gesamtsollbremsmoments wird zunächst nur der Generator aktiviert, wobei die Reibbremsen erst dann zugeschaltet werden, wenn das Gesamtsollbremsmoment das maximal verfügbare Bremsmoment des Generators um eine vorgegebene erste maximale Bremsmomentdifferenz überschreitet.

Die Erfindung geht dabei von der Überlegung aus, dass ein hoher Bremskomfort insbesondere dadurch erreicht werden kann, dass oftmaliges Zu- und Abschalten der Reibbremsen mit den damit einhergehenden Komforteinbußen konsequent vermieden wird. Dabei kann berücksichtigt werden, dass die Vorgabe einer Annäherung des Gesamtistbremsmomentes an das Gesamtsollbremsmoment bei realisierten Bremssystemen durch Abweichung und Veränderung bestimmter Parameter, wie sie beispielsweise durch die Abnutzung der Reibbremsen auftreten, ohnehin meist nicht exakt erfüllbar ist. Unter bewußter Inkaufnahme einer ohnehin meist nicht zu vermeidenden gewissen Abweichung vom Gesamtsoll- zum Gesamtistbremsmoment sollte der Betrag der Abweichung von Gesamtsoll- und Gesamtistbremsmoment in den kritischen Bereichen, bei denen ein sich wiederholendes Zu- und Abschalten von Reibbremsen auftreten kann, regelungstechnisch auf einem derart hohen Niveau halten werden, dass ein verfrühtes Zu- oder Abschalten von Reibbremsen verhindert werden kann. Bei einem Überschreiten des maximalen Generatorbremsmomentes werden Reibbremsen daher in der Art einer bewußt verzögerten Aktivierung erst zugeschaltet, wenn das Gesamtsollbremsmoment das Gesamtistbremsmoment des Bremssystems um eine ausgewählte maximale Bremsmomentdifferenz überschreitet.

Dabei sollte diese Toleranz zum Gesamtsollbremsmoment bzw. die maximale Bremsmomentdifferenz derart dimensioniert sein, dass ein zu frühzeitiges Zuschalten der Reibbremsen verhindert wird und gleichzeitig die Abweichung vom Gesamtsollbremsmoment nicht zu groß wird. Die maximale Bremsmomentdifferenz beträgt dafür vorteilhafterweise zwischen 0 Nm und etwa 300 Nm.

Bei getrennt ansteuerbaren Reibbremsen verschiedener Achsen des Kraftfahrzeuges werden dabei zunächst lediglich diejenigen Reibbremsen des Bremssystems zugeschaltet, die nicht einer mit einem Generator verbundenen Achse des Kraftfahrzeuges zugeordnet sind. Bei einem Kraftfahrzeug mit zwei Achsen wird so auch eine annehmbare Bremskraftverteilung sichergestellt, indem zusätzlich zum vom Generator aufgebrachten Bremsmoment mit Reibbremsen an der nicht mit dem Generator verbunden Achse gebremst wird. In weiterer vorteilhafter Ausgestaltung wird bei einem derartigen System für diejenigen Reibbremsen, die einer mit dem Generator verbundenen Achse zugeordnet sind, anhand des Gesamtsollbremsmoments und des maximal verfügbaren Bremsmoment des Generators ein Sollbremsmoment ermittelt, wobei diese Reibbremsen erst dann zugeschaltet werden, wenn das Gesamtbremsmoment das für das ermittelte Sollbremsmoment um eine vorgegebene zweite maximale Bremsmomentendifferenz überschreitet.

Damit die an der mit dem Generator verbundenen und/oder an der mit dem Generator nicht verbundenen Achse angeordneten zugeschalteten Reibbremsen nicht zu früh deaktiviert werden bzw. diese sich bereits nach einer kurzen Deaktivierungsphase wieder zuschalten, wird diesen Reibbremsen nach dem Zuschalten solange ein zugeordnetes Mindestbremsmoment als Sollbremsmoment vorgegeben, bis das für die jeweilige Achse ermittelte theoretische Sollbremsmoment auf einen vorgegebenen Grenzwert abgefallen ist. Zusätzlich zur verzögerten Zu- ist damit auch eine verzögerte Abschaltung der Reibbremsen vorgegeben. Der Bremsmomentverlauf der zugeschalteten Reibbremsen wird dadurch wie eine Hysteresekurve gestaltet, wobei beim Zuschalten der Reibbremsen eine Beaufschlagung mit einem vergleichsweise zu geringem Sollbremsmoment und beim Abschalten der Reibbremsen eine Beaufschlagung mit einem vergleichsweise zu großen Sollbremsmoment erfolgt.

Die verzögerte Zu- und Abschaltung der Reibbremsen kann vorzugsweise zweiseitig erfolgen, wobei in einer ersten Stufe diejenigen Reibbremsen zu- bzw. abgeschaltet werden, die einer nicht mit dem Generator verbundenen Fahrzeugachse zugeordnet sind, und in einer zweiten Stufe diejenigen Reibbremsen zu- oder abgeschaltet werden, die einer mit dem Generator verbundenen Fahrzeugachse zugeordnet sind.

Vorteilhafterweise wird dabei insbesondere die Bremsmomentdifferenz der deaktivierten Reibbremsen, die einer mit dem Generator verbundenen Achse zugeordnet sind, durch geeignete zusätzliche Beaufschlagung der jeweils anderen Reibbremsen kompensiert. Zweckmäßigerweise wird dafür für jede Reibbremse anhand des Gesamtsollbremsmoments und des maximal verfügbaren Bremsmoments des Generators ein theoretisches Sollbremsmoment ermittelt, wobei die an denjenigen Reibbremsen, die einer mit dem Generator verbundenen Achse des Kraftfahrzeuges zugeordnet sind, auftretende Abweichung zwischen dem an die jeweilige Reibungsbremse tatsächlich ausgegebenen und dem für sie ermittelten theoretischen Sollbremsmoment zu einem vorgegebenen Anteil als zusätzliches Sollbremsmoment an diejenigen Reibbremsen, die nicht der mit dem Generator verbundenen Achse des Kraftfahrzeuges zugeordnet sind, ausgegeben wird.

Um zu vermeiden, dass beim Zuschalten derjenigen Reibbremsen, die vor dem Erreichen des Zuschaltzeitpunktes bzw. der maximalen Bremsmomentdifferenz durch eine Beaufschlagung des Sollbremsmomentes anderer Reibbremsen kompensiert werden, eine zu starke Bremskraftverlagerung erfolgt, wird der Anteil der Bremsmomentdifferenz für die Beaufschlagung entsprechend gewählt. Zweckmäßigerweise wird für den Anteil des Differenzbremsmomentes etwa 25 % gewählt.

Vorzugsweise wird das beschriebene Verfahren mit einer Steuereinheit des Bremssystems durchgeführt.

Die mit der Erfindung erzielten Vorteile bestehen insbesondere in der Möglichkeit, bei einem "brake-by-wire"-System ein annehmbares Bremsverhalten sicherzustellen. Dies kann erreicht werden, indem ein sich wiederholendes Zu- und Abschalten von Reibbremsen unterdrückt wird. Dadurch wird die Geräuschbelastung, die beim wiederholten Zu- und Abschalten auftreten würde, vermieden, so dass sich der Brems- und Fahrkomfort verbessert. Die Überlagerung der bisher kritischen Umschaltschwellen der Reibbremsen mit geeigneten Hysteresekurven führt zu einer Verringerung von Zu- und Abschaltvorgängen von Reibbremsen, so dass Bremsvorgänge bezüglich des Brems- und Fahrgefühls für den Fahrer angenehmer verlaufen, wobei Reibbremsen nur zu- bzw. abgeschaltet werden, wenn das angeforderte Bremsmoment aus den Schaltschwellen der Hysteresekurven heraus bzw. in diese hineinläuft. Dabei kann der Generator des Bremssystem ungeregelt betrieben werden, so dass sich das zur Verfügung stehende maximale Generatorbremsmoment ausschöpfen lässt und sich damit ein hoher Energieanteil beim Bremsen zurückgewinnen lässt. Dies führt zu einem hohen Wirkungsgrad des Kraftfahrzeuges.

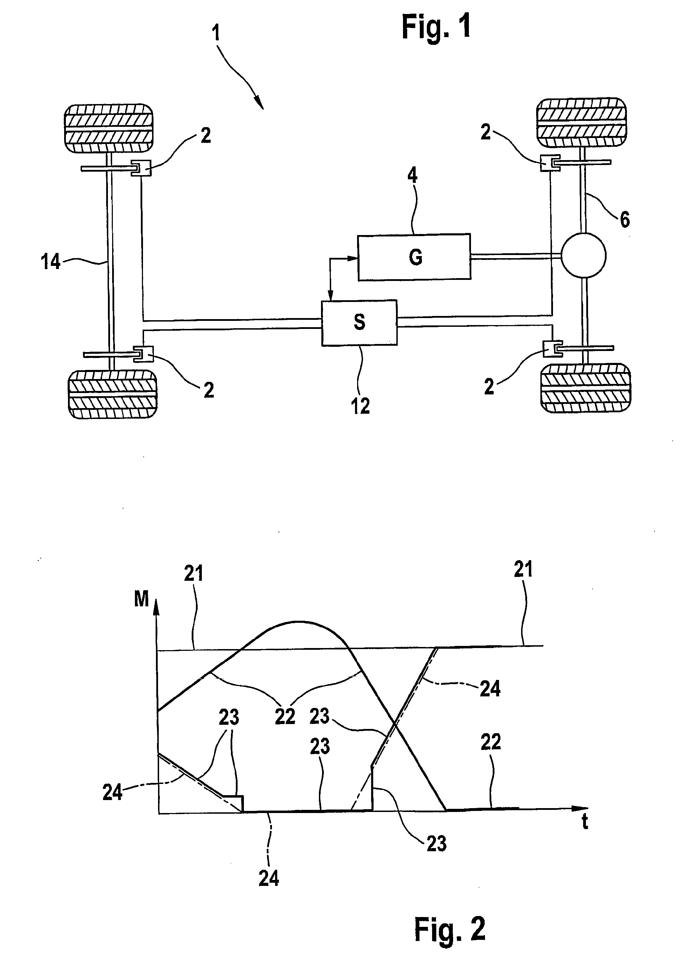

Ein Ausführungsbeispiel wird anhand der Figuren 1 und 2 näher erläutert. Darin zeigt
- Figur 1: den Prinzipschaltplan eines Bremssystems 1, und
- Figur 2: die Bremskraftverteilung des Bremssystems 1 bei einem Bremsvorgang.

In Figur 1 ist ein Prinzipschaltplan eines Bremssystems 1 für ein Kraftfahrzeug mit zwei Achsen dargestellt. Bei dem Bremssystem 1 handelt es sich um ein regeneratives Bremssystem 1, das neben den vier Reibbremsen 2 auch einen elektrischen Generator 4 zur Erzeugung von elektrischer Energie aufweist. Der elektrische Generator 4 ist dafür mit der vorderen Achse 6 des Kraftfahrzeuges verbunden. Das Bremssystem 1 ist dabei als serielles System ausgelegt, bei dem für einen hohen Wirkungsgrad des Bremssystems 1 und damit des Kraftfahrzeuges ein möglichst hoher Anteil des Gesamtbremsmomentes über den Generator 4 aufgebracht werden soll. Dafür wird der Generator 4 im wesentlichen ungeregelt betrieben, so dass dieser je nach Geschwindigkeit des Kraftfahrzeuges und dem Ladezustand einer nicht näher dargestellten Bordbatterie, in die die gewonnene elektrische Energie zum Antrieb des Kraftfahrzeuges mit einem ebenfalls nicht näher dargestellten Antrieb eingespeist wird, mit seinem jeweilig maximal zur Verfügung stehenden Bremsmoment betrieben wird.

Um bei dem entsprechend der Geschwindigkeit des Kraftfahrzeuges und dem Ladezustand der Bordbatterie in seiner Höhe variierenden Generatorbremsmoment das Bremssystem 1 regeln zu können bzw. das jeweils entsprechende Bremsmoment, das nicht über den Generator 4 aufgebracht werden kann, über das Zuschalten der Reibbremsen 2 zu ergänzen, ist das Bremssystem 1 als ein so genanntes "brake-by-wire"-System ausgebildet. Dabei wird der Bremswunsch des Fahrers über einen redundant ausgeführten elektronischen Weggeber am Bremspedal erfasst und das gesamte Bremssystem 1, wie insbesondere die Reibbremsen 2, über eine elektronische Steuereinheit 12 gesteuert und geregelt.

Als Eingangsgrößen für die Steuereinheit 12 werden dabei neben dem Bremspedalweg bzw. der Stellung des Bremspedals der Bremsmitteldruck des Bremsmittels in den Hydraulikleitungen herangezogen.

Das Bremssystem 1 wird für einen besonders hohen Bremskomfort über ein geeignetes Verfahren mit der Steuereinheit 12 geregelt. Dabei ist das Ziel des Verfahrens insbesondere, ein sich wiederholendes Zu- und Abschalten von Reibbremsen 2 aufgrund eines schwankenden Gesamtsollbremsmomentes oder schwankender Generatorleistung zu vermeiden, was sich für den Bremskomfort negativ auswirken würde. Dieses wird erreicht, indem die Reibbremsen 2 über die Steuereinheit 12 über eine Hysteresekurve angesteuert werden.

Zur Erläuterung des Verfahrens ist in Figur 2 ein Bremsvorgang des Bremssystems 1 dargestellt. Bei dem Bremsvorgang wird von einem konstanten Gesamtsollbremsmoment ausgegangen, das über das Bremspedal 6 vom Fahrer angefordert wird. Dieses Gesamtsollbremsmoment ist in Linie 21 dargestellt und verläuft bezüglich der Zeit konstant. In Linie 22 ist das maximal zur Verfügung stehende Bremsmoment des Generators 4 im Zeitverlauf dargestellt. Dabei überschreitet das maximale Generatorbremsmoment das Gesamtsollbremsmoment in einem zeitlichen Bereich, der aus der Figur 2 ersichtlich ist, so dass lediglich in diesem Bereich nicht das maximal zur Verfügung stehende Bremsmoment des Generators 4 angefordert wird, sondern lediglich das Bremsmoment, das dem Gesamtsollbremsmoment entspricht.

Die aufgrund des begrenzten maximalen Generatorbremsmomentes zur Erreichung des Gesamtsollbremsmomentes nötige Bremsmomentdifferenz in den anderen Phasen des Bremsvorgangs wird von den Reibbremsen 2 aufgebracht, wobei im Ausführungsbeispiel zunächst lediglich die Reibbremsen 2 der Hinterachse 14 des Kraftfahrzeuges zugeschaltet werden, deren Bremsmomentverlauf aus Linie 23 hervorgeht. In Linie 24 ist die theoretisch, aufgrund des begrenzten maximalen Generatorbremsmomentes, zur Erreichung des Gesamtsollbremsmomentes nötige Bremsmomentdifferenz im Zeitverlauf dargestellt. Wie aus der Figur 2 hervorgeht sinkt das Bremsmoment der hinteren Reibbremsen 2 von Beginn des Bremsvorgangs zunächst mit steigender Generatorleistung kontinuierlich entlang der zum Generatorbremsmoment zu beaufschlagenden Bremsmomentdifferenz ab, wobei das Gesamtistbremsmoment zunächst dem Gesamtsollbremsmoment entspricht.

Den hinteren Reibbremsen 2 wird vor dem Erreichen einer minimalen Bremsmomentdifferenz, die im Ausführungsbeispiel 0 Nm beträgt, von der Steuereinheit 12 ein Mindestbremsmoment vorgegeben, das im Ausführungsbeispiel 25 Nm beträgt, so dass das Bremsmoment der hinteren Reibbremsen 2 bei einem Unterschreiten der Bremsmomentdifferenz von 25 Nm bei 25 Nm konstant gehalten wird. Erst wenn die Bremsmomentdifferenz auf 0 Nm abgefallen ist, werden die hinteren Reibbremsen 2 deaktiviert. In dem Bereich zwischen einer von 25 Nm auf 0 Nm abfallenden Bremsmomentdifferenz überschreitet also das Gesamtistbremsmoment das Gesamtsollbremsmoment. Bei fallender Generatorleistung und steigender Bremsmomentdifferenz werden die hinteren Reibbremsen 2 erst wieder aktiviert, wenn die Bremsmomentdifferenz eine vorgegebene maximale Bremsmomentdifferenz von 50 Nm überschreitet, wie aus der Figur ersichtlich ist. Danach steigt das Bremsmoment der vorderen Reibbremsen 2 entlang der steigenden Bremsmomentdifferenz an.

Die Überlagerung des Zu- und Abschaltpunktes der Reibbremsen 2 mit einer maximalen und minimalen Schwelle, ähnlich einer Hysteresekurve, verringert dabei ein häufiges Zu- und Abschalten der Reibbremse, das bei geringen Schwankungen der Bremsmomentanforderung oder schwankender Generatorleistung auftreten würde.

Bei einem Überschreiten des maximal mit dem Generator 4 und den hinteren Reibbremsen 2 aufzubringenden Bremsmomentes werden über die Steuereinheit 1 auch die vorderen Reibbremsen 2 aktiviert, was aus dem dargestellten Bremsvorgang in Figur 2 nicht näher hervorgeht. Dabei werden ähnlich wie bei der hinteren Achse auch die Reibbremsen 2 der vorderen Achse mit der Steuereinheit 12 derart zu- und abgeschaltet, dass ein sich wiederholendes Zu- und Abschalten der vorderen Reibbremsen verhindert wird. Die vorderen Reibbremsen werden dafür erst zugeschaltet, wenn die Bremsmomentdifferenz eine maximale Bremsmomentdifferenz von 75 Nm überschreitet. Nach der Aktivierung werden die Reibbremsen erst deaktiviert, wenn die Bremsmomentdifferenz auf eine minimale Bremsmomentdifferenz von 0 Nm abgefallen ist. Vorher wird den vorderen Reibbremsen 2 ein Mindestbremsmoment von 50 Nm vorgegeben.

Um bei einer Bremsmomentdifferenz von unter 75 Nm einen Teil des nicht durch die vorderen Reibbremsen aufgebrachten Bremsmoment zu kompensieren, weil diese deaktiviert sind, wird das Sollbremsmoment der hinteren Reibbremsen 2 mit einem Anteil der Bremsmomentdifferenz beaufschlagt. Um bei einem Erreichen der Bremsmomentdifferenz von 75 Nm ein zu starkes Einnicken des Kraftfahrzeuges durch ein Zuschalten der vorderen Reibbremsen 2 durch eine vorherige zu starke Bremsmomentkompensation an der Hinterachse zu verhindern, beträgt der Anteil der Bremsmomentdifferenz für die Beaufschlagung der Hinterachse etwa 25 %.

### Bezugszeichenliste

- 1: Bremssystem
- 2: Reibbremse
- 4: Generator
- 6: Vorderachse
- 12: Steuereinheit
- 14: Hinterachse
- 21, 22 23, 24: Linie

## Patentansprüche

1. Verfahren zur Steuerung eines Bremssystems (1) eines Kraftfahrzeuges, das einen elektrischen Generator (4) und eine Anzahl von hydraulischen, elektronisch steuerbaren, jeweils einer Achse des Kraftfahrzeuges zugeordneten Reibbremsen (2) aufweist, und dessen Bremsmoment sich aus dem Bremsmoment des Generators (4) und dem Bremsmoment der Reibbremsen (2) zusammensetzt, bei dem nach der Vorgabe eines situationsabhängig ermittelten Gesamtsollbremsmoments zunächst nur der Generator (4) aktiviert wird, und bei dem die Reibbremsen (2) verzögert erst dann zugeschaltet werden, wenn das Gesamtsollbremsmoment das maximal verfügbare Bremsmoment des Generators (4) um eine vorgegebene erste maximale Bremsmomentdifferenz überschreitet, bei dem zunächst lediglich diejenigen Reibbremsen (2) des Bremssystems (1) zugeschaltet werden, die nicht einer mit dem Generator (4) verbundenen Achse des Kraftfahrzeuges zugeordnet sind, **dadurch gekennzeichnet, dass** anhand des Gesamtsollbremsmoments und des maximal verfügbaren Bremsmoments des Generators (4) ein Sollbremsmoment für diejenigen Reibbremsen (2), die einer mit dem Generator (4) verbundenen Achse zugeordnet sind, ermittelt wird, wobei diese Reibbremsen (2) verzögert erst dann zugeschaltet werden, wenn das Gesamtsollbremsmoment das für sie ermittelte Sollbremsmoment um eine vorgegebene zweite maximale Bremsmomentdifferenz überschreitet.

2. Verfahren nach Anspruch 1, bei dem als maximale Bremsmomentdifferenz zwischen 0 Nm und etwa 300 Nm vorgegeben wird.

3. Verfahren nach Anspruch 1 oder 2, bei dem für diejenigen Reibbremsen (2), die nicht einer mit dem Generator (4) verbundenen Achse des Kraftfahrzeuges zugeordnet sind, anhand des Gesamtsollbremsmoments und des maximal verfügbaren Bremsmoments des Generators (4) ein theoretisches Sollbremsmoment ermittelt wird, wobei diesen Reibbremsen (2) jeweils solange ein zugeordnetes Mindestbremsmoment als Sollbremsmoment vorgegeben wird, bis das für diese Achse ermittelte theoretische Sollbremsmoment auf einen vorgegebenen Grenzwert abgefallen ist.

4. Verfahren nach einem der Ansprüche 1 bis 3, bei dem für diejenigen Reibbremsen (2), die einer mit dem Generator (4) verbundenen Achse des Kraftfahrzeuges zugeordnet sind, anhand des Gesamtsollbremsmoments und des maximal verfügbaren Bremsmoments des Generators (4) ein theoretisches Sollbremsmoment ermittelt wird, wobei diesen Reibbremsen (2) jeweils solange ein zugeordnetes Mindestbremsmoment als Sollbremsmoment vorgegeben wird, bis das für diese Achse ermittelte theoretische Sollbremsmoment auf einen vorgegebenen Grenzwert abgefallen ist.

5. Verfahren nach einem der Ansprüche 1 bis 4, bei dem für jede Reibbremse (2) anhand des Gesamtsollbremsmoments und des maximal verfügbaren Bremsmoments des Generators (4) ein theoretisches Sollbremsmoment ermittelt wird, wobei die an denjenigen Reibbremsen (2), die einer mit dem Generator (4) verbundenen Achse des Kraftfahrzeuges zugeordnet sind, auftretende Abweichung zwischen dem an die jeweilige Reibungsbremse tatsächlich ausgegebenen und dem für sie ermittelten theoretischen Sollbremsmoment zu einem vorgegebenen Anteil als zusätzliches Sollbremsmoment an diejenigen Reibbremsen (2), die nicht der mit dem Generator (4) verbundenen Achse des Kraftfahrzeuges zugeordnet sind, ausgegeben wird.

6. Verfahren nach Anspruch 5, wobei ein Anteil von etwa 25 % vorgegeben wird.

7. Bremssystem (1) eines Kraftfahrzeuges, das einen elektrischen Generator (4) und eine Anzahl von hydraulischen, elektronisch steuerbaren Reibbremsen (2) aufweist, die Achsen des Kraftfahrzeuges zugeordnet sind, wobei das Bremssystem (1) über eine Steuereinheit (12) mit einem Verfahren nach einem der Ansprüche 1 bis 6 steuerbar ist.

## Claims

1. Method for controlling a brake system (1) of a motor vehicle which has an electric generator (4) and a number of hydraulic, electronically controllable friction brakes (2) which are each assigned to an axle of the motor vehicle, the braking torque of which brake system (1) is composed of the braking torque of the generator (4) and the braking torque of the friction brakes (2), in which after the predefinition of an overall setpoint braking torque, determined as a function of the situation, firstly only the generator (4) is activated, and in which method the friction brakes (2) are applied with a delay only when the overall setpoint braking torque exceeds the maximum available braking torque of the generator (4) by a predefined first maximum braking torque difference, in which method firstly only those friction brakes (2) of the brake system (1) which are not assigned to an axle of the motor vehicle connected to the generator (4) are applied, **characterized in that** on the basis of the overall setpoint braking torque and the maximum available braking torque of the generator (4) a setpoint braking torque is determined for those friction brakes (2) which are assigned to an axle which is connected to the generator (4), wherein these friction brakes (2) are applied with a delay only when the overall braking torque exceeds the setpoint braking torque defined for them by a predefined second maximum braking torque difference.

2. Method according to Claim 1, in which between 0 Nm and approximately 300 Nm is predefined as a maximum braking torque difference.

3. Method according to Claim 1 or 2, in which a theoretical setpoint braking torque is determined for those friction brakes (2) which are not assigned to an axle of the motor vehicle which is connected to the generator (4), on the basis of the overall setpoint braking torque and the maximum available braking torque of the generator (4), wherein an assigned minimum braking torque is respectively predefined as a setpoint braking torque for these friction brakes (2) until the theoretical setpoint braking torque which is determined for this axle has dropped to a predefined limiting value.

4. Method according to one of Claims 1 to 3, in which a theoretical setpoint braking torque is determined for those friction brakes (2) which are assigned to an axle of the motor vehicle which is connected to the generator (4), on the basis of the overall setpoint braking torque and the maximum available braking torque of the generator (4), wherein in each case an assigned minimum braking torque is predefined as a setpoint braking torque for these friction brakes (2) until the theoretical setpoint braking torque which is determined for this axle has dropped to a predefined limiting value.

5. Method according to one of Claims 1 to 4, in which a theoretical setpoint braking torque is determined for each friction brake (2) on the basis of the overall setpoint braking torque and the maximum available braking torque of the generator (4), wherein a predefined portion of the deviation, occurring at those friction brakes (2) which are assigned to an axle of the motor vehicle connected to the generator (4), between the setpoint braking torque which is actually output to the respective friction brake and the theoretical setpoint braking torque which is determined for it is output as an additional setpoint braking torque to those friction brakes (2) which are not assigned to the axle of the motor vehicle which is connected to the generator (4).

6. Method according to Claim 5, wherein a portion of approximately 25% is predefined.

7. Brake system (1) of a motor vehicle which has an electric generator (4) and a number of hydraulic, electronically controllable friction brakes (2) which are assigned to axles of the motor vehicle, wherein the brake system (1) can be controlled by means of a control unit (12) with a method according to one of Claims 1 to 6.

## Revendications

1. Procédé pour commander un système de freinage (1) d'un véhicule automobile qui présente un générateur électrique (4) et une pluralité de freins à friction hydrauliques (2) à commande électronique, associés chacun à un essieu du véhicule automobile, et dont le couple de freinage se compose du couple de freinage du générateur (4) et du couple de freinage des freins à friction (2), dans lequel, suivant la prescription d'un couple de freinage de consigne total déterminé en fonction de la situation, tout d'abord seulement le générateur (4) est activé, et dans lequel les freins à friction (2) sont activés de manière retardée seulement après que le couple de freinage de consigne total a dépassé le couple de freinage maximal disponible du générateur (4) d'une première différence de couple de freinage maximale prédéfinie, dans lequel tout d'abord seulement les freins à friction (2) du système de freinage (1) qui ne sont pas associés à un essieu du véhicule automobile connecté au générateur (4) sont activés, **caractérisé en ce que** l'on détermine, à l'aide du couple de freinage de consigne total et du couple de freinage maximal disponible du générateur (4), un couple de freinage de consigne pour les freins à friction (2) qui sont associés à un essieu connecté au générateur (4), ces freins à friction (2) étant activés de manière retardée seulement après que le couple de freinage de consigne total a dépassé le couple de freinage de consigne déterminé pour eux d'une deuxième différence de couple de freinage maximale prédéfinie.

2. Procédé selon la revendication 1, dans lequel on prédéfinit comme différence de couple de freinage maximale une valeur entre 0 Nm et environ 300 Nm.

3. Procédé selon la revendication 1 ou 2, dans lequel, pour les freins à friction (2) qui ne sont pas associés à un essieu du véhicule automobile connecté au générateur (4), l'on détermine, à l'aide du couple de freinage de consigne total et du couple de freinage maximal disponible du générateur (4), un couple de freinage de consigne théorique, ces freins à frictions (2) étant à chaque fois affectés d'un couple de freinage minimal associé en tant que couple de freinage de consigne tant que le couple de freinage de consigne théorique déterminé pour cet essieu n'est pas descendu à une valeur limite prédéfinie.

4. Procédé selon l'une quelconque des revendications 1 à 3, dans lequel, pour les freins à friction (2) qui sont associés à un essieu du véhicule automobile connecté au générateur (4), l'on détermine, à l'aide du couple de freinage de consigne total et du couple de freinage maximal disponible du générateur (4), un couple de freinage de consigne théorique, ces freins à friction (2) étant à chaque fois affectés d'un couple de freinage minimal associé en tant que couple de freinage de consigne tant que le couple de freinage de consigne théorique déterminé pour cet essieu n'est pas descendu à une valeur limite prédéfinie.

5. Procédé selon l'une quelconque des revendications 1 à 4, dans lequel, pour chaque frein à friction (2), l'on détermine, à l'aide du couple de freinage de consigne total et du couple de freinage maximal disponible du générateur (4), un couple de freinage de consigne théorique, l'écart entre le couple de freinage de consigne effectivement émis au niveau du frein à friction respectif et le couple de freinage de consigne théorique déterminé pour celui-ci, se produisant au niveau des freins à friction (2) qui sont associés à un essieu du véhicule automobile connecté au générateur (4), étant émis à raison d'une proportion prédéfinie, en tant que couple de freinage de consigne supplémentaire aux freins à friction (2) qui ne sont pas associés à l'axe du véhicule automobile connecté au générateur (4).

6. Procédé selon la revendication 5, dans lequel une proportion d'environ 25 % est prédéfinie.

7. Système de freinage (1) d'un véhicule automobile, qui présente un générateur électrique (4) et une pluralité de freins à friction hydrauliques (2) à commande électronique, qui sont associés à des essieux du véhicule automobile, le système de freinage (1) pouvant être commandé par le biais d'une unité de commande (12) au moyen d'un procédé selon l'une quelconque des revendications 1 à 6.
